# EUROPÄISCHE PATENTANMELDUNG

(11) **EP 1 097 974 A2**
(43) Veröffentlichungstag der Anmeldung: **09.05.2001**
(21) Anmeldenummer: 00122320.5
(22) Anmeldetag: 23.10.2000
(51) Int. Cl.: C09J 7/02, B05B 15/04

(54) **Selbstklebender Formkörper**

(30) Priorität: 04.11.1999 DE 19953097
(71) Anmelder: Beiersdorf Aktiengesellschaft, 20245 Hamburg (DE)
(72) Erfinder: Himmelsbach, Peter, 21614 Buxtehude (DE); Drewes, Dorothee, 20255 Hamburg (DE); Külper, Klaus, Dr., 25421 Pinneberg (DE); Nick, Joachim, 25436 Tornesch (DE); Nickel, Oliver, 22587 Hamburg (DE); Walter, Stefanie, 12489 Berlin (DE)

(57) **Zusammenfassung**

Ungeschäumter, flexibler, länglicher Formkörper mit wenigstens teilweise faseriger Struktur zum Abdecken eines Substrates mit einer Dicke von mehr als 3 mm dadurch gekennzeichnet, daß der Formkörper
- bei einer Belastung von 5 N/cm (Breite) eine Dehnung von wenigstens 10%
   aufweist,
- mindestens partiell selbstklebrig ist,
- in der Dicke mindestens um 10 % komprimierbar ist und
- eine Biegesteifigkeit in Längsrichtung von weniger als 200 x cm² aufweist.

## Beschreibung

### Gegenstand der Erfindung

Die Erfindung beschreibt ein ungeschäumtes, selbstklebriges Produkt mit faseriger Struktur zum Maskieren. Bevorzugt sind Anwendungen zum Maskieren von Oberflächen genannt, welche behandelt, ausgerüstet, veredelt oder beschichtet werden sollen.

### Hintergrund der Erfindung

Beim Behandeln, Ausrüsten, Veredeln und Beschichten von Oberflächen werden häufig selbstklebende Abdeckbänder eingesetzt, um Bereiche, die nicht behandelt, ausgerüstet, veredelt oder beschichtet werden sollen zu schützen. Nach dem Behandeln, Ausrüsten, Veredeln oder/und Beschichten können diese Bänder abgezogen werden. Insbesondere beim Beschichten mit einem Anstrichstoff kann dieses vor oder nach dem physikalischen oder chemischen Härten abgezogen werden. Vorteilhafte Materialien weisen eine gewisse Resistenz gegenüber dem abzuweisende Produkt auf. Ferner sind sie auch innert gegenüber dem Substrat. Ferner gibt es auf Produkte zum Abdecken über einen langen Zeitraum.

Insbesondere bei Abklebebänder für Maler- und Lackiererarbeiten sind rückstandsfrei abzulösende Selbstklebeprodukte bevorzugt. Eine Aufnahme oder zumindestens gute Haftung der Lackprodukte an dem Abdeckband ist notwendig. Im allgemeinen bestehen diese Produkte aus dünnen Papieren, Folien oder Filmen, welche durch entsprechende Ausrüstungsschritte den Anforderungen angepaßten werden. Generell gibt es diese Produkte in verschiedenen Ausführungen und sind im Handel erhältlich. Nachteilig ist für diese Produkte in machen Anwendungen die geringe Dicke. Insbesondere beim Spriztlackieren im Autoreparaturbereich sind Sicken und Spalten nur durch aufwendiges Mehrfachabkleben mit einem dünnen Produkt gegen den Sprühnebel abzudichten. Ferner sind derartig gestaltete Produkte wenig kompressiblen. Eine andere Möglichkeit besteht darin ein Schaum in den Bereich einzulegen. Hierdurch lassen sich jedoch keine scharfen Kanten erreichen. Ein weiterer Nachteil ist zudem noch, daß Schäume immer eine zellenförmige Struktur aufweisen. Schäume hoher Festigkeit sind somit weniger offen und können somit weniger Lack aufnehmen. Sehr offene Schäume haben eine gute Lackaufnahme, weisen sich jedoch durch geringe Festigkeit auf. Daher sind offene Schäume für starkklebende Anwendung ungeeignet.

EP 0365 510 offenbart ein länglichen, kompressiblen und biegbaren Schaumpolster, das Flächenbehandlung widersteht, zum Abdecken von zu behandelnden Flächen.

EP 0384 624 offenbart ebenfalls ein Schaum, welcher nicht kalt verschweißt wurde und mit einem Kleber ggf. ausgerüstet wurde.

Aufgabe der Erfindung war es ein Produkt zu entwickeln, welche o.a. Nachteile nicht aufweist.

Gelöst wurde die Aufgabe durch Formkörper gemäß Anspruch 1, insbesondere durch einen ungeschäumten, flexiblen, länglichen Formkörper zum Abdecken eines Substrates mit einer Dicke von mehr als 3 mm dadurch gekennzeichnet, daß der Formkörper bei einer Belastung von 5 N/cm (Breite) eine Dehnung von wenigstens 10% aufweist, mindestens partiell selbstklebrig ist, in der Dicke (bzw. Höhe o.Z-Richtung) mindestens um10 % komprimierbar ist und eine Biegesteifigkeit in Längsrichtung von weniger als 200 N x cm² aufweist.

Speziell durch den voluminösen, flexiblen Charakter ist eine einfache Abdeckung von Substratspalten möglich. In einer weiteren Ausführungsform hat der Formkörper eine Dicke von 4 bis 200 mm, bevorzugt 5 bis 120 und besonders bevorzugt 6 bis 30 mm. Wichtig ist das eine Deformation im Spalt durch ein gutes elastisches Rückstellverhalten ausgeglichen wird. Der Formkörper ist in seiner Höhe (bzw. Dicke, Z-Ausrichtung) je nach Anwendung 20 bis 95% kompremierbar und deckt so ein großes Spektrum von Einsatzfeldern ab. Um eine gute faltenfreie Kurvengängigkeit zu gewähren ist eine Dehnbarkeit in Längsrichtung von mindestens 10% erforderlich. Bevorzugt sind Formkörper mit einer Dehnbarkeit von 20 bis 2000%, besonders bevorzugt 25 bis 1000%, ganz besonders bevorzugt 30 bis 500%.

Wichtig für ein gutes Anmoddelieren ist eine angemessene Biegesteifigkeit. Für die Anwendung als Abdeckmaterial haben sich Biegesteifigkeiten von weniger als 200 N x cm² als vorteilhaft erwiesen. Bevorzugt werden Biegesteifigkeiten von zwischen 0,1 und 30 N x cm², besonders bevorzugt zwischen 0,5 und 20 N x cm². Eine ausgeprägt sichere Anwendung konnte mit Formkörpern mit einer Breite von mindestens 4 mm erzielt werden. Bevorzugt sind Formkörper mit einer Breite von 6 bis 200 mm, besonders bevorzugt 8 bis 30 mm.

Zur Erreichung von weichen Lackkanten werden insbesondere kreisförmige oder ovale Querschnitte oder Kanten mit runden Radien verwendet. Vorteilhaft für die Anwendung haben sich ein Höhen/Breitenverhältnis von kleiner eins, bevorzugt 0,1 bis 0,95, besonders bevorzugt 0,2 bis 0,95 ergeben. Scharfe Kanten können durch flache Profile erzielt werden. Ferner kann der Formkörper auch unsymetrisch aufgebaut sein, so daß nur eine Kante eine Rundung aufweist.

Zur Aufnahme der Beschichtungsstoffe ist eine genügend große Benetzbarkeit vorteilhaft. Formkörper mit faserig strukturierten Stoffen sind begünstigt. Aber auch Stoffe mit großer Oberfläche finden Verwendung. Dieses ist ebenso wichtig für die gute Lackhaftung auf dem Formkörper. Das Zuführen von Hilfsstoffen kann unterstützend wirken.

Darüber hinaus kann der Formkörper auch vorbehandelt sein. Insbesondere eine Bestrahlung, oder Entladung (z.B. Corona) oder Flammbehandlung kann anwendungsbezogen eingesetzt werden.

Allgemein besteht der Erfindungsgegenstand aus orientierten oder unorientierten Einzelfasern oder Filamenten, wobei die Fasern eine gute Haftung zueinander haben.

Vorteilhaft haben sich Spinnfaservliese oder Filamentvliese gezeigt. In einer bevorzugten Ausführung des Erfindungsgegenstand wird der Gegenstand durch mechanische bzw. areodynamische, hydrodynamische oder thermodynamische Prozesse oder deren Kombination gewonnen. Bevorzugt werden Trockenvliese, Naßvliese oder Spinnvliese oder Laminate aus der Kombination der genannten Vliesarten. Besonders bevorzugt als Kern sind voluminöse Vliese aus versponnenen Polymerenfasern. Die Herstellung solcher Vliese wird durch Verwirbelung der polymeren Schmelze gegen einen Luftstrom und/oder durch permanente Schwenkbewegungen der Spinnbalken erreicht und ist im Stand der Technik ausreichend bekannt.

Bei der Verwendung von kaschierten und/oder laminierten Gebilden sind für spezielle Anwendungen auch naß- oder trockengelegte Vliese als zumindest als Teil günstig.

In einer alternativen Anwendung werden die Fasern auch als Fäden oder Zwirne und in Geweben oder Gewirken verarbeitet. Vorteilhaft sind Abstandsgewirke oder Abstandsgewebe, welche durch mehr oder weniger steife Abstandsfäden verbunden sind und so eine ausreichend hohes dauerbeständiges Rückstellvermögen haben.

In einer speziellen Ausführung wird ein mittels Nähfäden übernähtes Vlies als dreidimensionaler Formgebilde zum Maskieren von Oberflächen verwendet, wobei die Anzahl der Nähte auf dem Vlies vorteilhafterweise mindestens 3/cm, bevorzugt 5/cm bis 50/cm, beträgt. Die Höchstzugkraft des Erfindungsgegenstands beläuft sich auf mindestens 10 N/cm, bevorzugt 20 bis 450 N/cm, besonders bevorzugt 30 bis 250 N/cm, wobei sich die Kraft auf die Breite des Erfindungsgegenstands bezieht.

Als Materialien für die Nähfäden können demzufolge vorteilhafterweise polymere Fasern aus Polypropylen, Polyester, Polyamid, Aramid oder Polyethylen sowie auch mineralische Fasern wie Glasfasern oder Kohlenstoffasern eingesetzt werden. Weiter können auch Zwirne oder Mischzwirne, insbesondere Siromischzwirne, eingesetzt werden. Für spezielle Anwendungen können auch Mischfaserfäden, -garne oder -zwirne eingesetzt werden. Weiterhin können die Nähfäden wenigstens teilweise gefärbt sein, um das Trägermaterial optisch ansprechender zu gestalten. In alternativen Ausführungen können auch Fasern natürlichen Ursprungs wie Baumwolle, Seide, Flachs oder Zellwolle verwendet werden.

Für spezielle Anwendungen kann der Nähfaden auch elastisch sein. Hieraus regeneriert sich dann ein elastischer Basisträger mit einer Dehnung bis zu 250 % bei einer Belastung von 10 N/cm. Beispielsweise sei hier als ein Polyamidfaden erwähnt. Ein derartiges Gebilde erzeugt bei einer Dehnung von 20 % bis 70 % eine Kompressionskraft von 0,2 N/cm bis 10 N/cm.

Bei der alternativen Ausführungsform des Erfindungsgegenstands wird ein Vlies als Trägermaterial zum Maskieren von Oberflächen eingesetzt. Das Vlies ist dabei durch die Bildung von Nähten, die von Maschen aus den Fasern des Vlieses gebildet werden, verstärkt, wobei vorteilhafterweise die Anzahl der Nähte auf dem Vlies mindestens 3/cm, bevorzugt 5/cm bis 50/cm, betragt. Die Höchstzugkraft des Erfindungsgegenstands beträgt mindestens 10 N/cm, bevorzugt 20 bis 450 N/cm, besonders bevorzugt 50 bis 250 N/cm, wobei sich die Kraft auf die Breite des Erfindungsgegenstands bezieht.

In einer weiteren Ausführungsform werden zwei Lagen Vlies mittels mindestens eines Fadens verfestigt. Vorteilhaft ist hier durch die Biegesteifigkeit und besondere elastische Rückstellkraft des Fadens die räumliche Ausprägung

Der Erfindungsgegenstand basiert auf bekannten Vliesen, die mechanisch verfestigt sind, und zwar durch das Übernähen mit separaten Fäden oder durch das Vermaschen. Im ersten Falle ergeben sich die Vlies-Faden-Nähgewirke. Zur Herstellung dieser wird ein Faservlies vorgelegt, das beispielsweise quergetäfelt sein kann und mittels separater Fäden in Fransen- oder Trikotlegung übernäht wird.

Diese Vliese sind unter dem Namen 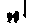 Maliwatt" (von der Firma Malimo) oder Arachne bekannt.

Bei der zweiten Art der Verfestigung wird ebenfalls vorzugsweise ein quergetäfeltes Vlies vorgelegt. Während des Verfestigungsvorganges ziehen Nadeln aus dem Vlies selbst Fasern heraus und formen sie zu Maschen, wobei in Fransenlegung Nähte entstehen. Dieses Vlies-Nähgewirke ist unter dem Namen 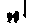 Malivlies", ebenfalls von der Firma Malimo, verbreitet.

Eine Übersicht über die verschiedenen Arten der mechanisch verfestigten Faservliesstoffe ist dem Artikel 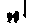 Kaschierung von Autopolsterstoffen mit Faservliesen" von G. Schmidt, Melliand Textilberichte 6/1992, Seiten 479 bis 486, zu entnehmen.

Vorteilhafterweise weisen die Vliese Längsnähte auf, wobei die Orientierung der Nähfäden entsprechend der Beanspruchung des Trägermaterials im Gebrauch ausgerichtet sein sollte.

Als Ausgangsmaterialien für den Vliesstoff können generell alle organischen und anorganischen Faserstoffe auf natürlicher und synthetischer Basis verwendet werden. Beispielhaft seien Viskose, Baumwolle, Seide, Polypropylen, Polyester, Polyurethan, Polyamid, Aramid oder Polyethylen sowie auch mineralische Fasern wie Glasfasern oder Kohlenstoffasern angeführt. Die vorliegende Erfindung ist aber nicht auf die genannten Materialien beschränkt, sondern es können eine Vielzahl weiterer Fasern zur Vliesbildung eingesetzt werden.

Die zur Bildung des Vlieses eingesetzten Fasern weisen vorzugsweise ein Wasserrückhaltevermögen auf von mehr als 0,5 %, bevorzugt zwischen 2 bis 70 %, besonders bevorzugt zwischen 3 und 50 %.

Dies wird für ein mittels Nähfäden übernähtes Vlies zum einen durch die Verwendung eines Nähfadenmaterials mit hohem Elastizitätsmodul, zum anderen durch die Verwendung eines Nähstiches, der eine möglichst gestreckte Nähfadenlage gewährleistet, erreicht.

Vorteilhafte Materialkombinationen sind zum Beispiel Nähfäden aus hochfesten Polymerfasern wie Polyamid, Polyester, hochverstrecktem Polyethylen oder Mineralfasern wie Glas und vorgelegten Vliesmaterialien wie Baumwolle oder Zellwolle.

Für ein Vlies, bei dem die Bildung von Nähten dadurch erfolgt, daß die Maschen aus den Fasern des Vlieses gebildet werden, ist das Material des vorgelegten Vlieses entsprechend auszuwählen, für den Nähstich gilt Entsprechendes.

Weiterhin als vorteilhaft hat sich herausgestellt, daß der Erfindungsgegenstand ein Flächengewicht von weniger als 12000 g/m², bevorzugt 50 bis 10000 g/m², besonders bevorzugt 150 bis 3000 g/m² aufweisen soll.

In einer weiteren vorteilhaften Ausführungsform ist der Erfindungsgegenstand von Hand senkrecht zur Orientierung der Nähte und/oder in Richtung der Nähte reißbar. Dieses findet dann Anwendung, wenn das erfindungsgemäße Gebilde auf sich selbst zur Rolle gewickelt wird.

Bei einer anderen Ausführungsform ist diese Reißbarkeit nicht notwendig. Hier kann es sich um vorgestanzte Gebilde zum Maskieren von Oberflächen handeln.

Des weiteren kann der Erfindungsgegenstand mit einem Faden oder mehreren Fäden aus Monofil, Multifil, Stapelfasergarn oder Spinnfasergarn und/oder mit orientierten hochfesten Fasern verstärkt sein, wobei die Fäden und/oder Fasern insbesondere eine Festigkeit von mindestens 20 cN/tex aufweisen.

Weiter können auch Zwirne oder Mischzwirne, insbesondere Siromischzwirne, eingesetzt werden. Für spezielle Anwendung können auch Mischfaserfäden, -garne oder -zwirne eingesetzt werden. Hierbei kann es sich zum Beispiel um Umwindegarne oder spezielle Stapelfaserumwindegarne handeln.

Vorteilhaft ist hier, daß durch die Kombination von verschiedenen Fasertypen besondere oder spezielle Eigenschaften schon in dem Verstärkungsfaden erreicht werden können. Beispielhaft sind hier die Kombinationen von Polyester oder Polyamid mit Baum- oder Zellwolle.

Die Verstärkungsfasern oder -fäden können dabei aus organischen oder anorganischen Materialien bestehen, so beispielsweise und bevorzugt aus Glas, Kohlenstoff, Polyester oder speziellen Polyamiden bestehen, weiterhin können die Verstärkungsfasern wenigstens teilweise gefärbt sein, um den Erfindungsgegenstand optisch ansprechender zu gestalten. Auf diese Art ist es problemlos möglich, die verstärkten Träger optisch zu differenzieren. Hierzu bieten sich insbesondere gefärbte Glas- oder Polymerfäden an.

Bei einer vorteilhaften Ausführungsvariante zeigt das Trägermaterial durch den Zusatz von hochfesten Fasern oder Fäden mit einer Höchstzugkraft über 40 cN/tex eine Höchstzugkraft über 50 N/cm und eine Höchstzugkraftdehnung unter 25% bei einem Flächengewicht von unter 840 g/m².

Die Anzahl der an- oder eingebrachten Fäden beziehungsweise hochfesten Fasern hängt in erster Linie vom jeweils vorgesehenen Verwendungszweck und der angestrebten Höchstzugkraft sowie Höchstzugkraftdehnung des Erfindungsgegenstands, seiner eigenen Beschaffenheit und der jeweiligen Festigkeit der Fasern und Fäden selbst ab und kann deshalb in relativ weiten Grenzen variieren.

Vorteilhafte Materialkombinationen sind zum Beispiel Verstärkungsfäden oder -fasern aus hochfesten Polymerfasern wie Polyamid, Polyester, hochverstrecktem Polyethylen oder Mineralfasern wie Glas und vorgelegten Vliesmaterialien wie Baumwolle oder Zellwolle.

Weiter werden die Verstärkungen vorzugsweise gezielt entsprechend der Beanspruchungsrichtung des Erfindungsgegenstands eingefügt, d.h. in Längsrichtung. Sie können jedoch auch, wenn dies zweckdienlicher ist, zusätzlich oder nur in Quer- oder Schrägrichtung oder beispielsweise kurven-, spiral- oder zick-zackförmig oder regellos verlaufen.

In einer weiteren vorteilhaften Ausführungsform ist das Trägermaterial von Hand senkrecht zur Orientierung der Verstärkung und/oder in Richtung der Verstärkung reißbar.

Mit höherer Festigkeit des Vliesmaterials sowie steigenden Anteils an Verstärkungsfasern hält der Träger einer größeren Beanspruchung und Belastung stand. Auch sehr stark verstärkte Erfindungsgegenstand sind in der Lage, große Mengen an Feuchtigkeit aufzunehmen oder durchzulassen, und üben somit eine angenehme Anwenderempfindung aus, wobei die Verstärkungen keine beziehungsweise nur eine geringe Menge an Feuchtigkeit aufnehmen, wodurch sich ihre Eigenschaften nicht ändern.

Als Materialien für Formkörper können demzufolge polymere Fasern aus Polypropylen, Polyester, Polyamid, Aramid oder Polyethylen sowie auch Fasern natürlichen Ursprungs wie Baumwolle oder Zellwolle, oder deren Kombinationen, eingesetzt werden. Ein Weiterverarbeiten wie Arimieren, Laminieren, Spinnen, Zwirnen, Vernähen, Vermaschen, Weben, Wirken kann für spezielle Anwendung Vorteile zeigen. Der Einsatz von Abstandshaltern ist ebenso vorteilhaft.

Der Formkörper ist vorzugsweise von Hand quer reißbar und/oder schneidbar. Fallweise kann eine vorgefertigte Perforartion günstig sein.

Die selbstklebrige Beschichtung ist sowohl durch Direktbeschichtung als auch durch Transferbeschichtung möglich. Bei der Transferbeschichtung wird ein Hilfsträger, wie Trennpapier, -folie, Walze oder Gurtband zuerst beschichtet und der eigentliche Formkörper dann zugeführt. Ferner ist es möglich die Klebemasse partiell auf dem Formträger aufzugetragen, beispielsweise durch Rasterdruck, Siebdruck, Thermoflexodruck oder Tiefdruck.

Eine vollflächige Beschichtung ist jedoch ebenfalls möglich. Ein Verspinnen oder Versprühen kann dem Produkt besondere Eigenschaften verleihen. Für eine besondere Ausführung liegt die selbstklebrige Fläche innerhalb der draufsichtigen Projektionsfläche.

Für die Beschichtung wird eine Selbstklebemasse bevorzugt, welche eine hohe Klebkraft aufweist. Als Klebemassen lassen sich vorteilhafterweise Selbstklebemassen einsetzen auf Basis natürlicher und synthetischer Kautschuke und anderer synthetischer Polymere wie Acrylate, Methacrylate, Polyurethane, Polyolefine, Polyvinylderivate, Polyester oder Silikone mit entsprechenden Zusatzstoffen wie Klebharzen, Weichmachern, Stabilisatoren und anderen Hilfsstoffen, wie Füllstoffe soweit erforderlich.

Insbesondere thermoplastische Heißschmelzklebemassen weisen vorteilhafte Eigenschaften auf und sind aus produktionstechnischen Gründen begünstigt.

Bevorzugte Heißschmelzklebemassen auf Basis von Blockcopolymeren zeichnen sich durch ihre vielfältige Variationsmöglichkeiten aus, denn durch die gezielte Absenkung der Glasübergangstemperatur der Selbstklebemasse infolge der Auswahl der Klebrigmacher, der Weichmacher sowie der Polymermolekülgröße und der Molekularverteilung der Einsatzkomponenten wird die notwendige funktionsgerechte Verklebung mit Substrat auch an kritischen Stellen des menschlichen Bewegungsapparates gewährleistet.

Die hohe Scherfestigkeit der Heißschmelzklebemasse wird durch die hohe Kohäsivität des Polymeren erreicht. Die gute Anfaßklebrigkeit ergibt sich durch die eingesetzte Palette an Klebrigmachern und Weichmachern.

Für besonders starkklebende Systeme basiert die Heißschmelzklebemasse bevorzugt auf Blockcopolymeren, insbesondere A-B-, A-B-A-Blockcopolymere oder deren Mischungen. Die harte Phase A ist vornehmlich Polystyrol oder dessen Derivate, und die weiche Phase 8 enthält Ethylen, Propylen, Butylen, Butadien, Isopren oder deren Mischungen, hierbei besonders bevorzugt Ethylen und Butylen oder deren Mischungen.

In einer vorteilhaften Ausführung weist die Heißschmelzklebemasse die nachfolgend angegebene Zusammensetzung auf:
- 10 Gew.-% bis 90 Gew.-%: Blockcopolymere,
- 5 Gew.-% bis 80 Gew.-%: Klebrigmacher wie Öle, Wachse, Harze und/oder deren Mischungen, bevorzugt Mischungen aus Harzen und Ölen,
- weniger als 60 Gew.-%: Weichmacher,
- weniger als 15 Gew.-%: Additive,
- weniger als 5 Gew.-%: Stabilisatoren.

Die als Klebrigmacher dienenden aliphatischen oder aromatischen Öle, Wachse und Harze sind bevorzugt Kohlenwasserstofföle, -wachse und -harze, wobei sich die Öle, wie Paraffinkohlenwasserstofföle, oder die Wachse, wie Paraffinkohlenwasserstoffwachse, durch ihre Konsistenz günstig auf die Hautverklebung auswirken. Als Weichmacher finden mittel- oder langkettige Fettsäuren und/oder deren Ester Verwendung. Diese Zusätze dienen dabei der Einstellung der Klebeeigenschaften und der Stabilität. Gegebenenfalls kommen weitere Stabilisatoren und andere Hilfsstoffe zum Einsatz.

Der erfindungsgemäße Formkörper weist eine Klebkraft auf Stahl von mindestens 0,5 N/cm (Beschichtungsbreite) auf, besonders eine Klebkraft zwischen 1,0 N/cm und 25 N/cm, besonders bevorzugt 1,5 bis 22 N/cm. Auf anderen Untergründen können andere Klebkräfte erreicht werden.

Der Formkörper ist nach der Anwendung rückstandsfrei ablösbar, auch dann wenn eine thermische Belastung von über 60°C vorlag. Spezielle Ausführungen lassen eine thermische Belastung von 65 °C bis 220 °C, besonders bevorzugt 68 °C bis 150 °C, ganz besonders bevorzugt 70 °C bis 120 °C.

In einer alternativen Verwendung wird der Formkörper durch Kalandern, Schweißen, Thermoprägen, -formen, Hydrophobieren, Primern, Imprägnieren, Beschichten aufbereitet.

In einer vorteilhaften Ausführung ist der Formkörper durch Dehnung entklebbar.

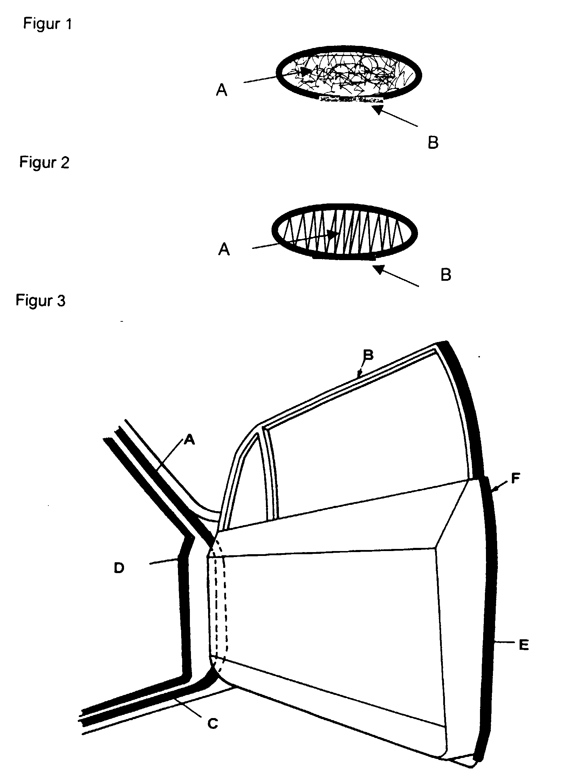

Figur 1 beschreibt die Ausformung eines Formkörpers aus einem voluminösen Vlies (A) und einer Selbstklebemasse (B).
Figur 2 beschreibt die Ausformung eines Formkörpers aus einem Abstandgewirke (A) und einer Selbstklebemasse (B).
Figur 3 beschreibt die Anwendung des erfindungsgemäßen Formkörpers am Beispiel einer Autotür. Wobei A bis F verschiedene Möglichkeiten darstellen.

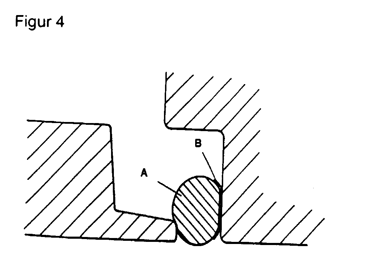

Figur 4 stellt die Stauchung des erfindungsgemäßen Formkörpers in der Anwendung dar. A beschreibt den voluminösen und B die selbstklebrige Schicht des Gebildes.

Im folgenden sei beispielhaft ein bevorzugter Formkörper beschrieben, ohne damit die Erfindung unnötig einschränken zu wollen.

### Beispiel 1:

Der Formkörper besteht zwei äußeren ungeschäumten Schichten Vliesstoff, welche mit Hilfe eines Abstandsfadens eine räumliche Ausrichtung von 6 mm erhalten. Die Vliesbahnen wurde mit einen Polyesterfadens mit ausreichend hoher Biegesteifigkeit übernäht, wobei die Nähfadenzahl 22/cm Gebildebreite betrug. Die Wasseraufnahme des Polyesterfadens betrug 0,3 %. Nach den Übernähen wurde die Vliestoffe durch mechanische und thermische Verformung zueinander geführt und verbunden. Der Querschnitt des Formgebilde ist annähernd oval, wobei die Breite 29 mm beträgt und die Höhe 11 mm. Überschüssige Verbindungsnaht wurde entfernt. Anschließend wurde das Formgebilde imprägniert und einseitig einer selbstklebrigen Klebemasse ausgerüstet. Als Klebemasse wurde eine lösemittelbasierte Naturkautschukklebemasse verwendet. Die Masse besteht aus 45 % Naturkautschuk, 40 % Kohlenwasserstoffharz (Handelsname: Hercures 5742), 14 % anorganischem Füllstoff auf Basis von Zinkoxid und 1 % Alterungsschtzmittel. Diese Stoffe werden mach den in der Kautschukindustrie üblichen Methoden in Lösung gebracht. Als Lösemittel dient Siedegrenzenbenzin 60/95, der Feststoffgehalt beträgt 37 %. Die Masse wird in einer Schichtstärke aufgerakelt, daß nach dem Abtrocknen des Benzins ein Masseauftrag von 40g/m² verbleibt. Die Dehnung des Formgebildes beträgt bei 5 N/cm Belastung ca. 120 %. Die Höhe ist um 50 % komprimierbar. Die Biegesteifigkeit in Längsrichtung beträgt 20 N x cm².

### Beispiel 2

Der Formkörper besteht aus einem Laminat aus drei Schichten. Einer Oberschicht aus Viscosevlies mit einer Dicke von 150 µm, einer Mittelschicht basierend auf eines Vlieses aus Polyester und einer Unterschicht aus einem Viscosevlies mit einer Dicke von 150 µm. Die Mittelschicht weist eine Dicke von 11 mm auf, welche auf 3 mm komprimierbar ist. Die Breite des Formkörpers ist 13 mm. Der Querschnitt des Formkörpers ist oval. Die Ober- und Unterschicht sind überlappend an die Mittelschicht verklebt worden. Hier wurde ein Spühkleber verwendet. Die Dehnung des Formkörpers betrug 45 %. Es zeigte sich eine Biegesteifigkeit von 18 N x cm². Die Unterschicht wurde selbstklebrig ausgerüstet. Es wurde eine Heißschmelzselbstklebemasse verwendet. Der Formkörper wurde im transfer mit Klebemassen beschichtet.

Schmelzhaftklebemasse setzt sich wie folgt zusammen:
- ein A-B/A-B-A Blockcopolymer, welches aus harten und weichen Segmenten besteht. Bevorzugt ist A ein Polymerblock vornehmlich basierend auf Styrol und B ein Polymerblock auf Basis von Ethylen und Butylen (Kraton G). Das Verhältnis der A-B-A Type zur A-B beträgt 7:3. Der Anteil an der Klebemasse beträgt 64 %.
- einem Paraffinkohlenwasserstoff (32%).
- Kohlenwasserstoffharzen (3,5%). (Super Resin HC 140)
- einen Alterungsschutzmittel (<0,5) (Irganox 1076)

Die eingesetzten Komponenten wurden in einem Thermomischer bei 175°C homogenisiert. Der Erweichungspunkt dieser Klebemasse beträgt ca. 95 °C (DIN 52011) und eine Viskosität von 2400 mPas bei 150 °C (DIN 53018, Brookfield DV II, Sp. 21)

Die Transferbeschichtung erfolgte mit 50 m/min bei einer Temperatur von 120 °C. Das Trägermaterial wurde mit 47 g/m² beschichtet.

## Patentansprüche

1. Ungeschäumter, flexibler, länglicher Formkörper mit wenigstens teilweise faseriger Struktur zum Abdecken eines Substrates mit einer Dicke von mehr als 3 mm dadurch gekennzeichnet, daß der Formkörper
• eine Dehnung von wenigstens 10%
aufweist,
• mindestens partiell selbstklebrig ist,
• in der Dicke (bzw.Höhe, Z-Richtung) mindestens um 10 % komprimierbar ist und
• eine Biegesteifigkeit in Längsrichtung von weniger als 200N x cm² aufweist.

2. Formkörper nach Anspruch 1, dadurch gekennzeichnet, daß die Dicke des Formkörpers 4 bis 200 mm, bevorzugt 5 bis 120 mm und besonders bevorzugt 6 bis 30 mm beträgt.

3. Formkörper nach mindestens einem der vorangegangenen Ansprüche, dadurch gekennzeichnet, daß die Dehnung des Formkörpers bei einer Belastung von 5 N/cm (Breite) 20 % bis 2000 %, bevorzugt 25 bis 1000%, besonders bevorzugt 30 bis 500 % beträgt.

4. Formkörper nach mindestens einem der vorangegangenen Ansprüche, dadurch gekennzeichnet, daß der Formkörper eine elastisches Rückstellverhalten aufweist.

5. Formkörper nach mindestens einem der vorangegangenen Ansprüche, dadurch gekennzeichnet, daß der Formkörper bevorzugt 20 bis 95 % in der Dicke (bzw. Höhe, Z-Richtung) komprimierbar ist.

6. Formkörper nach mindestens einem der vorangegangenen Ansprüche, dadurch gekennzeichnet, daß die Biegesteifigkeit des Formkörpers zwischen 0,1 und 30 N x cm² beträgt.

7. Formkörper nach mindestens einem der vorangegangenen Ansprüche, dadurch gekennzeichnet, daß der Formkörper eine Breite von mindestens 4 mm bevorzugt 6 bis 200 mm, besonders bevorzugt 8 bis 30 mm aufweist.

8. Formkörper nach mindestens einem der vorangegangenen Ansprüche, dadurch gekennzeichnet, daß der Formkörper einen kreisförmigen oder ovalen Querschnitt aufweist

9. Formkörper nach mindestens einem der vorangegangenen Ansprüche, dadurch gekennzeichnet, daß der Formkörper das Verhältnis von Höhe/Breite maximal 1 bevorzugt 0,1 bis 0,95, besonders bevorzugt 0,2 bis 0,9, ist.

10. Formkörper nach mindestens einem der vorangegangenen Ansprüche, dadurch gekennzeichnet, daß der Formkörper eine Lackhaftung aufweist.

12. Formkörper nach mindestens einem der vorangegangenen Ansprüche, dadurch gekennzeichnet, daß der Formkörper eine Lackaufnahme aufweist.

13. Formkörper nach mindestens einem der vorangegangenen Ansprüche, dadurch gekennzeichnet, daß die Fasern nach Anspruch 10 eine Lackaufnahme aufweisen.

14. Formkörper nach mindestens einem der vorangegangenen Ansprüche, dadurch gekennzeichnet, daß der Formkörper eine Klebkraft von mindestens 0,5 N/cm (beschichtete Fläche), bevorzugt 1,0 N/cm bis 25 N/cm, besonders bevorzugt 1,5 bis 22 N/cm aufweist.

15. Formkörper nach mindestens einem der vorangegangenen Ansprüche, dadurch gekennzeichnet, daß der Formkörper durch Dehnung entklebbar ist.

16. Formkörper nach mindestens einem der vorangegangenen Ansprüche, dadurch gekennzeichnet, daß der Formkörper rückstandsfrei ablösbar ist.

17. Formkörper nach mindestens einem der vorangegangenen Ansprüche, dadurch gekennzeichnet, daß die Klebefläche des Formkörpers innerhalb der draufsichtigen Projektionsfläche liegt.

18. Formkörper nach mindestens einem der vorangegangenen Ansprüche, dadurch gekennzeichnet, daß der Formkörper reversibel verklebbar ist.

19. Formkörper nach mindestens einem der vorangegangenen Ansprüche, dadurch gekennzeichnet, daß der Formkörper eine Temperaturbeständigkeit von wenigstens 60°C, bevorzugt 65°C bis 220°C, besonders bevorzugt 68 °C bis 150°C und ganz besonders bevorzugt von 70°C bis 120°C, aufweist.

20. Formkörper nach mindestens einem der vorangegangenen Ansprüche, dadurch gekennzeichnet, daß der Formkörper in Querrichtung perforiert ist.

21. Formkörper nach mindestens einem der vorangegangenen Ansprüche, dadurch gekennzeichnet, daß der Formkörper in Querrichtung reißbar ist.

22. Formkörper nach mindestens einem der vorangegangenen Ansprüche, dadurch gekennzeichnet, daß der Formkörper wenigstens eine runde Kante aufweist.

23. Verwendung eines Formkörpers nach einem der Ansprüche 1 - 22 zum Maskieren, insbesondere zum vorübergehenden Abdecken von Oberflächen bei deren Behandlung, insbesondere Lackieren.

24. Verwendung eines Formkörpers nach einem der Ansprüche 1 - 22 zum Maskieren, insbesondere zum vorübergehenden Abdecken von Oberflächen als Schutz vor mechanischen Beanspruchungen.
